# EUROPEAN PATENT SPECIFICATION

(11) **EP 3 247 931 B1**
(45) Date of publication and mention of the grant of the patent: **22.05.2019**
(21) Application number: 16709109.9
(22) Date of filing: 11.01.2016
(51) Int. Cl.: F16L 37/086, F16L 37/12

(54) **QUICK CONNECT COUPLING**
SCHNELLVERBINDUNGSKOPPLUNG
RACCORD RAPIDE

(30) Priority: 21.01.2015 IT MI20150056
(43) Date of publication of application: 29.11.2017
(73) Proprietor: Polo S.R.L., 23841 Annone di Brianza (LC) (IT)
(72) Inventor: POZZI Marco, 23900 Lecco (IT); LOCATELLI Silvia, 23900 Lecco (IT)
(74) Representative: Brasca, Marco
(86) International application number: PCT/IB2016/050101
(87) International publication number: WO 2016/116827

(56) References cited:
- EP-A1- 2 320 117
- GB-A- 503 031

## Description

### Technical field

The present invention relates to a quick connect coupling. In particular, the present invention relates to a device for quickly connecting a conduit of a circuit carrying a fluid to a threaded or profiled male or female terminal. The invention falls within the field of quick connect couplings capable of rapidly and safely performing operations of connecting and disconnecting two different conduits carrying fluids, whilst avoiding cumbersome operations of manual tightening, which would require the use of spanners or other tools and assuring both mechanical tightness and a hermetic seal. The use of such quick connect couplings is necessary, for example, but not exclusively, when functional tests are performed on products requiring a connection to pneumatic / hydraulic / plumbing circuits (for example: boilers, motors, pumps, hydraulic/pneumatic cylinders, valves, etc.). In particular, the device of the present invention lends itself to very broad uses, in which the pressure and operating flow rate can vary from negative values (presence of a vacuum) to very high values.

### State of the Art

There are known manually actuable "push-pull" quick connect couplings in which the connection step is carried out by gripping an external locking collar of the coupling and pushing the coupling itself against the terminal it is to be connected to until the latter is engaged and mechanically held and the disconnection step is carried out by acting once again on the aforesaid external locking collar.

EP 2 320 117 A1 discloses a coupling for threaded terminals, in particular for male terminals, adapted to allow the quick coupling without needing to screw the coupling onto the male thread to be coupled. It comprises a main body which may be easily gripped by the user, within which a plurality of components allow the gripping means to be automatically coupled to the thread of the male terminal, simply following the axial pushing of the coupling. An outer mechanism directly connected to said inner components then allows the coupling to be easily disengaged.

EP 1876381 discloses a quick connect coupling for threaded end-pieces. One end of the coupling intended to receive the end-piece is provided with an annular connecting body made up of a plurality of annular segment elements resiliently coupled to one another by means of a resilient ring element and having, on the inner or outer surface thereof, depending on the type of end-piece to be connected, a thread or contour configured to provide the connection with the end-piece.

WO 2013/175351 illustrates a quick connect coupling for threaded or profiled terminals, which comprises: a central body extending between an upper end removably sealingly connectable with the terminal and a lower end connectable with a circuit; an engaging clamp operatively associated with the central body and operable at least between a first configuration, in which it is not engaged to the terminal and enables the coupling or decoupling of the central body to and from the terminal, and a second configuration, in which it is engaged to the terminal and connects the central body to the latter; activating means that are movably active on the central body and on the engaging clamp so as to enable the passage of the engaging clamp between the first and second configurations and, consequently, the coupling and decoupling of the central body to and from the terminal.

The Applicant has observed that the known quick connect couplings, such as the ones described above, can be improved in several respects, in particular with reference to the mechanical elements of such couplings which enter into direct contact with the terminals and with reference to the systems for actuating said mechanical elements.

The Applicant has in fact observed, for example, that the known annular segments as per document EP 187638, being moved by means of a simple resilient ring, do not ensure a precise coupling with the terminal and can be subject to deterioration in the performance delivered over time.

The Applicant has further observed that the engaging clamp of the type illustrated in WO 2013/175351 must necessarily possess sufficiently long arms in order to provide the necessary radial opening/closing of its ends and this, besides not ensuring a secure, precise engagement, does not allow the longitudinal dimensions of the coupling to be contained.

### Aim of the invention

In this context, the Applicant has set itself the objective of providing a quick connect coupling that is qualitatively superior and possibly more economical and also more compact than those of the prior art.

The Applicant has set itself the aim, in particular, of providing a quick connect coupling that ensures a mechanical coupling (with the respective threaded or profiled terminal) that is more precise and more secure than in the case of prior art terminals and thus ensures a secure engagement also in the presence of highpressure fluids.

The Applicant has also set itself the aim of providing a quick connect coupling that occupies little space and is in particular axially compact.

The Applicant has also set itself the aim of providing a quick connect coupling that is simple to construct, assemble and disassemble.

### Summary of the invention

The Applicant has found that these objectives and aims can be achieved by constructing a quick connect coupling in accordance with the present invention, of the type claimed in the appended claims and/or described in the following aspects. In accordance with one aspect, the present invention relates to a quick connect coupling per for threaded or profiled terminals, comprising:
a substantially tubular main body internally delimiting a passage conduit for a fluid,
wherein said main body has a first end configured to be removably connected with a terminal and a second end opposite the first end and configured to be connected with a circuit;
at least one clamp operatively engaged to the main body at the first end, wherein said at least one clamp comprises an annular sector and is movable radially relative to the main body between a first position of release from the terminal and a second position of engagement to terminal; wherein said at least one clamp comprises a control pin mounted on the respective annular sector, radially oriented and slidingly engaged in a respective radial seat fashioned in the main body;
activation devices operatively engaged with said at least one clamp so as to determine the passage thereof between the first position and the second position. Each clamp is defined by the annular sector and by the respective control pin and translates radially, guided by the control pin, which slides in the respective radial seat. Each control pin extends radially from the respective annular sector.

The Applicant has verified that the structure of said at least one clamp configured as an annular sector equipped with a control pin makes it possible to obtain a precise, fluid radial translation of the same during the movement between the first and second positions, whilst its circumferential position (i.e. the angular position around a main axis of the passage conduit) is fixed and defined. Furthermore, the Applicant has verified that the limited dimensions of the annular sectors and of the control pins enable the overall dimensions of the quick connect coupling to be considerably reduced.

In one aspect, the activation devices are operatively active on the control pin, preferably on a terminal end of the control pin spaced from the annular sector. Preferably, said terminal end of the control pin is located at a first opening of the radial seat opposite a second opening of said radial seat near the annular sector. In one aspect, the quick connect coupling is of the female type and said at least one clamp is radially further away from the main axis in the first position than in the second position.

In a different aspect, the quick connect coupling is of the male type and said at least one clamp is radially nearer to the main axis in the first position than in the second position.

Preferably, the radial seat is fashioned in the tubular main body. Preferably, if the coupling is female, the annular sector is located at a surface that is radially internal to said tubular main body and the first end of the control pin is located at a surface that is radially external to said tubular main body.

Preferably, if the coupling is male, the annular sector is located at a surface that is radially external to said tubular main body and the first end of the control pin is located at a surface that is radially internal to said tubular main body.

In one aspect, the quick connect coupling comprises a single clamp held in its respective angular position around the main axis by the respective control pin. In this way it is possible also to connect terminals that are not round.

In one aspect, the quick connect coupling comprises a plurality of clamps arranged around the passage conduit. The clamps are held in the respective angular positions around the main axis by the respective control pins.

Preferably, the annular sectors of said clamps all have the same angular width. Preferably, the respective control pin of each clamp is centred relative to the angular width of the annular sector.

Preferably, the number of said clamps is comprised between two and ten, more preferably between four and eight; even more preferably the number is equal to six. Preferably, at least two clamps of said plurality of clamps are arranged in diametrically opposed positions relative to a main axis of the passage conduit.

In one aspect, if the coupling is female, the clamps of said plurality of clamps, when they are in the first position, are circumferentially spaced apart from one another and, preferably, when they are in the second position, they are circumferentially adjacent to one another.

In one aspect, if the coupling is male, the clamps of said plurality of clamps, when they are in the first position, are circumferentially adjacent to one another and, preferably, when they are in the second position, they are circumferentially spaced apart from one another. In one aspect, the clamps of said plurality of clamps all have the same circumferential extent.

In one aspect, said at least one clamp is housed in an annular seat of the main body. Preferably, if the coupling is female, said annular seat is radially internal. Preferably, if the coupling is male, said annular seat is radially external. In the movement between the first and the second position, said at least one clamp moves radially in the annular seat. More in particular, in the movement between the first and the second position, the annular sector of the clamp moves radially in the annular seat and the respective control pin translates partly in the radial seat and partly in the annular seat. The annular seat acts as a guide that permits the clamps to slide freely in a radial direction while maintaining them perfectly aligned relative to the thread of the terminal.

In one aspect, the quick connect coupling comprises at least one limit stop element for said at least one clamp. The limit stop element limits the radial movement of the clamp. Preferably, if the coupling is female, the limit stop element limits the centripetal radial movement of the clamp. Preferably, if the coupling is male, the limit stop element limits the centrifugal radial movement of the clamp. Preferably, said limit stop element is part of said annular seat. Preferably, said limit stop element is a tooth defined by the main body.

In one aspect, the main body comprises an annular portion located at the first end in an axially external position relative to said at least one clamp. Said annular portion protects said at least one clamp from possible impacts. Preferably, said annular portion partly delimits the annular seat.

Preferably, said annular portion has a radially internal annular surface against which said at least one clamp axially rests. The axially annular surface forms the rest surface of greatest resistance on which the clamps release all the mechanical stresses and strains at the moment in which the quick connect coupling is subjected to pressure.

In one aspect, the main body has at least one radially internal (female quick connect coupling) or external (male quick connect coupling) annular surface configured to come into radial contact with the male or female terminal and act as a guide and centring element for the quick connect coupling relative to said terminal. Preferably, said at least one radially internal annular surface is borne by the annular portion. The guide and centring element is operative also in the presence of a reduced number of clamps.

In one aspect, the activation devices comprise a substantially tubular auxiliary body which is axially slidable relative to the main body, wherein said auxiliary body has an operative portion engaged or engageable with the control pin of said at least one clamp. Preferably, said operative portion acts on the terminal end of the control pin.

In one aspect, the auxiliary body comprises a locking collar radially external to the main body and axially movable over the main body. Preferably, if the coupling is female, the operative portion is an axial end of the locking collar. Preferably, if the coupling is male, the auxiliary body comprises a body that is radially internal relative to the main body and solidly connected to locking collar, wherein said operative portion is an axial end of the radially internal body. Preferably, the quick connect coupling comprises at least one connecting element solidly connected to the locking collar and to the radially internal body and passing in a slot fashioned in the main body. Preferably, the operative portion has a bevel acting against the terminal end of the control pin. The locking collar essentially has two functions: to generate the opening and closing of the quick connect coupling and guarantee a condition of safety again accidental release.

In one aspect, the quick connect coupling comprises a substantially tubular shutter coaxial with the main body, wherein the shutter is axially movable relative to the main body, and wherein said shutter has a head end intended to come into contact with the terminal. Preferably, the shutter comprises a gasket applied on the head end to assure the hermetic seal against the terminal. Preferably, if the coupling is female, the shutter is radially internal to the main body. Preferably, if the coupling is male, the shutter is radially external to the main body, more preferably the shutter is radially interposed between said main body and the locking collar. The shutter slides in contact with and is axially guided and centred by the main body. Preferably, the shutter is axially movable between a forward position toward the first end of the main body, wherein it radially and at least partially surmounts said at least one clamp in order to hold it in the first position of release from the terminal, and a rearward position, wherein it frees said at least one clamp and allows the radial movement thereof.

In one aspect, the quick connect coupling comprises coupling/release devices operatively active on the auxiliary body and on the shutter. The coupling/release devices are configured to block/unblock the axial movements of the shutter and of the auxiliary body relative to the main body via the movement of the locking collar. Preferably, the coupling/release devices comprise a coupling/release slider coaxial with the main body and axially movable relative to the main body and relative to the shutter. Preferably, the coupling/release devices further comprise at least one coupling/release element (more preferably a plurality) movable in a through hole fashioned in the main body, wherein said at least one coupling/release element is engaged/engageable with the coupling/release slider and with the auxiliary body. Preferably, said coupling/release element is a pin or a coupling/release ball.

The function of the slider is to permit the connection of the coupling only after the clamps have completely penetrated inside the terminal to be connected, thus assuring the best conditions of grip on the thread and guaranteeing a maximum condition of mechanical tightness.

Preferably, said at least one coupling/release element is movable between a first position of axially blocking the auxiliary body and releasing the slider and a second position of axially blocking the slider and releasing the auxiliary body. In one aspect, the coupling/release slider is radially interposed between the shutter and the main body.

In one embodiment, if the coupling is female, the coupling/release slider is radially external to the shutter and radially internal to the main body.

In a different embodiment, if the coupling is male, the coupling/release slider is radially external to the main body and radially internal to the shutter.

In one aspect, the slider has an annular groove for housing the coupling/release element.

In one aspect, if the coupling is male, the radially internal body has an annular groove for housing the coupling/release element.

In one aspect, if the coupling is female, the locking collar has a radially internal stop surface configured to enter into contact with the coupling/release element.

Preferably, the quick connect coupling comprises a first spring axially interposed between the main body and the auxiliary body and configured to push said auxiliary body toward the first end of the main body. Preferably, the first spring is radially external to the main body and radially internal to the locking collar. Preferably, the quick connect coupling comprises a second spring axially interposed between the main body and the shutter and configured to push said shutter toward the first end of the main body. Preferably, the second spring is radially internal to the shutter. In one embodiment, if the coupling is female, the second spring is radially internal to al main body. In a different embodiment, if the coupling is male, the second spring is radially external to the main body. Preferably, the quick connect coupling comprises a third spring axially interposed between the main body and the coupling/release slider and configured to push said coupling/release slider toward the first end of the main body. Preferably, the third spring is radially interposed between the main body and the shutter. In one embodiment, if the coupling is female, the third spring is radially internal to the main body and radially external to the shutter. In a different embodiment, if the coupling is male, the third spring is radially external to the main body and radially internal to the shutter.

In one aspect, the quick connect coupling is movable between a first configuration corresponding to the first position of release from the terminal and a second configuration corresponding to the second position of engagement to the terminal. In the first configuration, the auxiliary body is in a rearward position relative to the first end of the main body and is axially blocked relative to said main body by the coupling/release element set in the first position, the shutter is in a forward position toward the first end of the main body and radially and at least partially surmounts said at least one clamp in order to hold it in the first position of release from the terminal, and the slider is in a forward position toward the first end of the main body.

In the first configuration, the coupling/release element lies outside the annular groove of the slider. In the first configuration, if the coupling is male, the coupling/release element lies in the groove of the radially internal body. In the first configuration, if the coupling is female, the coupling/release element lies against the stop surface of the locking collar. In the first configuration, if the coupling is male, the slider pushes axially against the main body. In the first configuration, if the coupling is female, the slider pushes axially against the shutter.

In the first configuration, the auxiliary body is in a rearward position relative to the first end of the main body.

In the second configuration, the auxiliary body is in a forward position toward the first end of the main body.

In one aspect, the main body comprises a first portion bearing said at least one clamp and a second portion axially aligned with the first portion, wherein the first portion is removably screwed onto the second portion. In this manner the clamps (or the single clamp) can be easily installed before mounting the first portion on the second portion or removed after dismounting the first portion from the second portion.

In one aspect, the present invention also relates to a method for constructing a quick connect comprising:
making a complete ring;
cutting the complete ring into a plurality of annular sectors;
associating a control pin with each of the annular sectors, forming a plurality of clamps;
mounting at least one of said clamps on a respective main body of a quick connect coupling at a first end of said main body, inserting the control pin in a respective radial seat in the main body and the annular sector in an annular seat of a first portion of the main body.

Preferably, associating the control pin comprises: making a radial hole in the annular sector and inserting therein one end of the control pin. Preferably, the radial holes are fashioned before the ring is cut into sectors.

Preferably, the control pins are associated with the annular sectors at the time of being mounted on the respective main body.

In one aspect, the method comprises mounting one or more annular sectors of a ring on main bodies belonging to different quick connect couplings. Preferably, the method comprises mounting each of the annular sectors of the ring on a main body of a respective quick connect coupling. Preferably, the method comprises mounting diametrically opposed pairs of annular sectors of said ring on different main bodies belonging to different quick connect couplings. In this manner, with a single ring it is possible to produce a number of quick connect couplings with a saving of materials and processing.

In one aspect, the present invention also relates to a method for mounting a quick connect coupling, preferably in accordance with one or more of the preceding aspects and/or of the appended claims, comprising:
seating the clamps in the first portion of the main body before constraining it to the second portion;
screwing the first portion with the clamps onto the second portion.

In one aspect, the present invention also relates to a method for dismounting a quick connect coupling, preferably in accordance with one or more of the preceding aspects and/or of the appended claims, comprising:
unscrewing the first portion with the clamps from the second portion;
removing the clamps from the first portion when it is disengaged from the second portion.

### Brief description of the drawings

Additional features and advantages will become more apparent from the detailed description of a preferred, but not exclusive, embodiment, of a quick connect coupling in accordance with the present invention.

This description will be given below with reference to the attached drawings, provided solely for illustrative and therefore non-limiting purposes, in which:
- figure 1 shows a sectional view according to two radial planes and according to two respective operative configurations of a female quick connect coupling in accordance with the present invention associated with a threaded male terminal;
- figure 2 illustrates a profiled male terminal;
- figure 3 illustrates a front view of an element of the coupling of figure 1 in a first position;
- figure 4 illustrates the element of figure 3 in a second position;
- figures 5A-5D illustrate a sequence of operative steps suitable for constructing the element as per figures 3 and 4;
- figure 6 shows a sectional view according to two radial planes and according to two respective operative configurations of a quick connect coupling male in accordance with the present invention associated with a female threaded terminal;
- figure 7 illustrates a profiled female terminal;
- figure 8 illustrates a front view of an element of the coupling of figure 6 in a first position;
- figure 9 illustrates the element of figure 8 in a second position;
- figures 10A-10D illustrate a sequence of operative steps suitable for constructing the element as per figures 8 and 9.

### Detailed description of a preferred embodiment of the invention

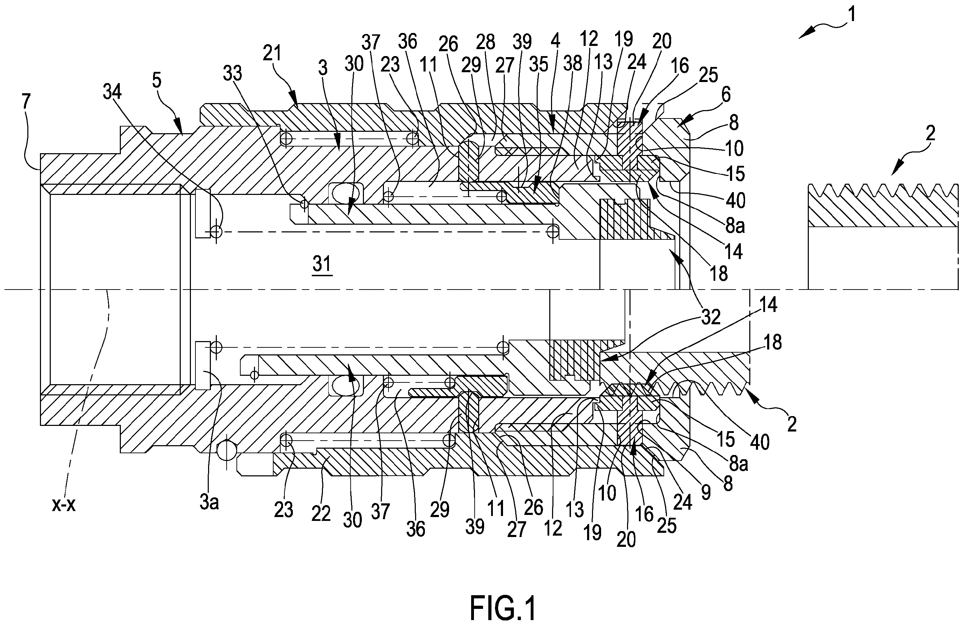

With reference to the appended figures, 1 denotes in its entirety a quick connect coupling for threaded or profiled terminals. Figure 1 illustrates, in particular, a female quick connect coupling associated with a male threaded terminal 2. The upper radial half-section of figure 1 illustrates the quick connect coupling 1 in a first configuration in which the terminal 2 is separated and disengaged from the quick connect coupling 1. The lower radial half-section of the figure 1 illustrates the quick connect coupling 1 in a second configuration in which the terminal 2 is engaged to the quick connect coupling 1.

The quick connect coupling 1 comprises a substantially tubular main body 3 that extends along a main axis "X-X". The main body 3 is made up of a first substantially tubular portion 4 that is axially adjacent and removably screwed to a second substantially tubular portion 5. The main body 3 has a first end 6 (belonging to the first portion 3) configured to be removably connected with the terminal 2 and a second end 7 (belonging to the second portion 5) opposite the first end 6 and configured to be connected, for example in a known manner (for example by screwing), with a pipe (not illustrated) of a circuit.

The first portion 4 of the main body 3 has an annular end portion 8 which delimits, in an axially internal position and in cooperation with the second portion 5, an annular seat 9 turned radially toward the main axis "X-X" and coaxial with said main axis "X-X". At said annular seat 9, the main body 3 has a plurality of radial seats 10 defined by through openings in the wall of the first portion 4. Said annular seats 10 are angularly equally spaced and open in a bottom surface of the aforesaid annular seat 9.

The main body 3 is further provided with through holes 11 axially spaced from the annular seat 9. Said through holes 11 are likewise radial, for example angularly equally spaced, and can be in a number that is equal to or different from the number of the radial seats 10. In the embodiment illustrated in figure 1, the through holes 11 are fashioned in the wall of the second portion 5 of the main body 3.

A terminal end 12 of the second portion 5 of the main body 3 which terminates at the first main body 4 delimits, together with the first main body 4, the aforesaid annular seat 9. Said terminal end 12 has a tooth 13 which extends axially in the aforesaid annular seat 9 and is radially spaced from the bottom surface of the same annular seat 9. In the illustrated embodiment, the tooth 13 has the profile of a circular edge coaxial with the main axis "X-X".

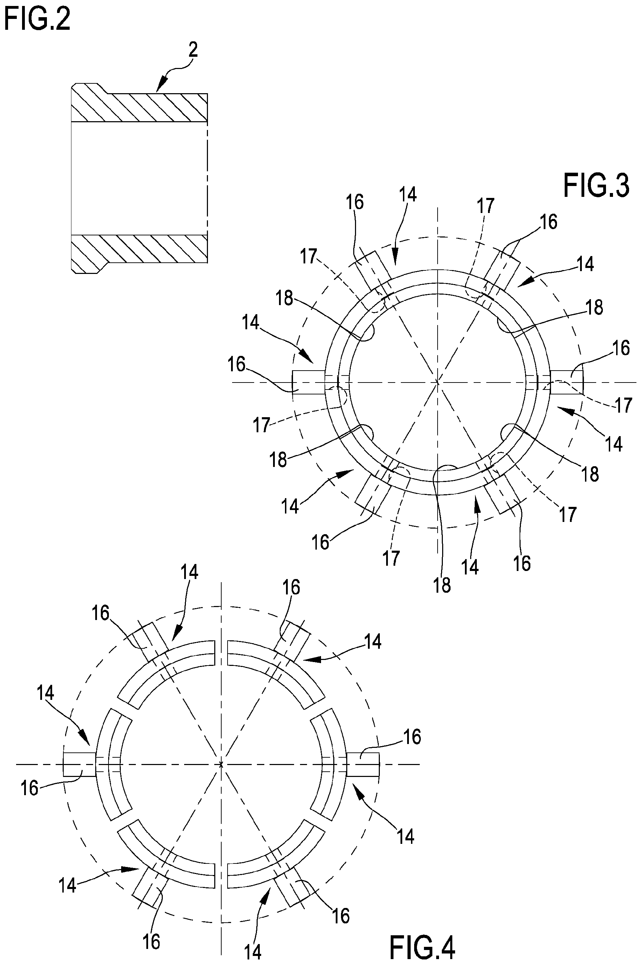

A plurality of clamps 14 is housed in the annular seat 9; each clamp is defined by a respective annular sector 15 and a control pin 16, which, at least when the clamp 14 is mounted on the coupling 1, moves solidly with the respective annular sector 15. In the illustrated embodiment (figures 3 and 4), the quick connect coupling 1 comprises six annular sectors 15, each of which extends angularly for about 60° around the main axis "X-X". Each of the annular sectors 15 has a radial hole 17, which opens radially outward and houses one end of a respective control pin 16. The control pins 16 extend away radially outward from the respective annular sectors 15.

The control pin 16 has two parts with two different diameters. The portion with a smaller diameter is configured to be able to be easily inserted into the radial hole 17 (without being blocked therein). The control pin 16 and the respective annular sector 15 are held together once mounted in the annular seat 9, as will be described in detail further below. In an alternative variant embodiment, the control pin 16 and the respective annular sector 15 are solidly joined (for example by interference).

The control pin 16 of each clamp 14 is centred relative to the angular width of the annular sector 15. Each of the annular sectors 15 has, on a radially internal surface thereof, a thread portion 18 (schematically illustrated) profiled so as to couple correctly with the externally threaded male terminal 2. Each of the annular sectors 15 has a stop edge 19 that projects axially and is set in a radially external position relative to the thread portion 18. In the illustrated embodiment, the stop edge 19 also extends as a circumferential arc.

The control pins 16 of each clamp 14 are housed in such a way as to be able to slide radially in the radial seats 10 and the annular sectors 15 are radially movable in the annular seat 9 independently of one another.

In particular, each of the annular sectors 15 is movable between a first position farther away from the main axis "X-X" and a second position closer to said main axis "X-X".

In the first position, each of the annular sectors 15 lies in contact with the bottom surface of the annular seat 9 (and is held there in the manner that will be described in detail further below), with its stop edge 19 radially spaced from the tooth 13. Furthermore, a terminal end 20 radially external to the control pin 16 projects radially from a radially external surface of the main body 3.

In the second position, each of the annular sectors 15 is radially spaced from the bottom surface of the annular seat 9 (and is held there in the manner that will be described in detail further below), with its stop edge 19 in abutment against the tooth 13. The tooth 13 acts as a limit stop element for the respective clamp 14. Furthermore, the terminal end 20 of the control pin 16 lies flush with the radially external surface of the main body 3.

With reference to figures 3 and 4, in the first position (figure 4) the annular sectors 15 are radially expanded and circumferentially spaced apart from one another. In the second position (figure 3), the annular sectors 15 are radially contracted and circumferentially adjacent to one another.

The quick connect coupling 1 according to the invention comprises a substantially tubular auxiliary body 21 which is axially slidable relative to the main body 3. In the embodiment of figure 1, the auxiliary body 21 is a locking collar 22 which surrounds the main body 3 and can slide over it. In a radially intermediate position between the locking collar 22 and the second portion 5 of the main body 3 there is a first spring 23 which lies in an annular gap delimited between the locking collar 22 and the second portion 5. The first spring 23 is of the helical type and coaxially surrounds the main axis "X-X". The first spring 23 lies in abutment against an annular surface of the main body 3 perpendicular to the main axis "X-X" and turned toward the first end 6 of the main body 3 and against an annular surface of the locking collar 22 perpendicular to the main axis "X-X" and turned toward said annular surface of the main body 3. The first spring 23 is configured to push the locking collar 22 toward the first end 6 of the main body 3.

An axial end of the locking collar 22 turned toward the first end 6 of the main body 3 has a bevel defined by a first conical surface 24 which is radially internal to and diverges toward said first end 6. Said first diverging conical surface 24 forms an operative portion configured to engage with the terminal ends 20 of the control pins 16. The locking collar 22 and the first conical portion 24 thereof form activation devices of the quick connect coupling 1 operatively engaged with the clamps 14.

In the first configuration (upper radial half-section of figure 1), the first conical surface 24 nearly touches the terminal ends 20 of the control pins 16 which project from the main body 3, leaving a minimal amount of play. In the second configuration (lower radial half-section of figure 1), the first conical surface 24 is set axially beyond the terminal ends 20 and lies near a conical surface 25 defined by the annular portion 8. The conical surface 25 of the annular portion 8 is radially external and converges toward the second end 7 of the main body 3. In said second configuration, the locking collar 22 lies above the terminal ends 20 radially external to the control pins 16 and maintains the annular sectors 15 in the second position (figure 3).

In radially internal position, the locking collar 22 has a stop surface 26 defined by a second conical radially internal surface diverging toward the first end 6 of the main body 3. Said second conical surface 26 is facing an abutment surface 27 defined by a radial enlargement of the main body 3 situated in the position of the first main body 4. The abutment surface 27 is radially external relative to the main body 3 and converges toward the second end 7 of said main body 3. Between the abutment surface 27 and the second conical surface 26, the main body 3 and the locking collar 22 delimit a first chamber 28 with a variable volume (depending on the relative axial position of the locking collar 22 and of the main body 3).

Coupling/release elements 29 defined by respective pins are inserted slidingly in the through holes 11 of the main body 3, which open into or in proximity to (depending on the configuration) the aforesaid first variable volume chamber 28. In the first configuration (upper radial half-section of figure 1), the pins 29 project radially outward from the respective through holes 11 (in the manner that will be described in detail further below) and the stop surface 26 of the locking collar 22 rests against radially external ends of the pins 29, pushed by the first spring 23. In the second configuration (lower radial half-section of figure 1), the pins 29 are completely retracted into the respective through holes 11 and the first spring 23 axially pushes the stop surface 26 of the locking collar 22 against the abutment surface 27.

The quick connect coupling 1 of figure 1 comprises a substantially tubular shutter 30 coaxial with the main body 3. The shutter 30 is radially internal to the main body 3 and is axially movable relative to said main body 3. The shutter 30 has a central passage that is coaxial with the main axis "X-X" and delimits, together with the main body 3, a passage conduit 31 for the fluid passing through the quick connect coupling 1. The shutter 30 has a head end 32 provided with a suitable gasket and intended to enter into contact with a head end of the terminal 2 (second configuration illustrated in the lower radial half-section of figure 1). The shutter 30 has a stop ring 33 which is set at an end opposite the head end 32; it is radially external and configured to enter into contact with a radially internal protuberance of the main body 3, in such a way as to prevent the shutter 30 from axially exiting the first end 6 of the main body 3. A second spring 34 is axially interposed between the main body 3 and the shutter 30 and is configured to push said shutter 30 toward the first end 6 of the main body 3. The second spring 34 illustrated is of the helical type, coaxial with the main axis and housed inside the shutter 30. The second spring 34 lies in abutment against a locking ring 3a which extends radially inside the main body 3 and against an annular surface of the shutter 30 that is perpendicular to the main axis "X-X" and turned toward the aforesaid. The second spring 34, when the quick connect coupling 1 is in the first configuration, pushes the stop ring 33 against the annular protuberance.

The quick connect coupling 1 comprises a coupling/release slider 35, which is likewise tubular, coaxial with the main body 3 and axially movable relative to the main body 3 and relative to the shutter 30. In figure 1 the coupling/release slider 35 externally surrounds the shutter 30 and is radially internal to the main body 3. In particular, the coupling/release slider 35 is housed in a second variable volume chamber 36 delimited radially between the main body 3 and the shutter 30. Said second chamber 36 further houses a third spring 37 axially interposed between the main body 3 and the coupling/release slider 36.

The third spring 37 is of the helical type and coaxially surrounds the main axis "X-X". The third spring 37 lies in abutment against an annular surface of the main body 3 which is perpendicular to the main axis "X-X" and turned toward the first end 6 of the main body 3, and against an annular surface of the coupling/release slider 35 which is perpendicular to the main axis "X-X" and turned toward said annular surface of the main body 3. The third spring 37 is configured to push the coupling/release slider 35 toward the first end 6 of the main body 3 and against an annular surface 38 of the shutter 30 which is perpendicular to the main axis "X-X" and turned toward the annular surface of the main body 3.

The coupling/release slider 35 has a radially external annular groove 39.

In the position of release from the terminal 2, illustrated in the upper half-section of figure 1, the quick connect coupling 1 is in the first configuration. In said first configuration, the coupling/release element 29 lies outside the annular groove 39 of the coupling/release slider 35. The coupling/release slider 35 is in abutment against the annular surface 38 of the shutter 30 and the third spring 37 pushes both the coupling/release slider 35 and the shutter 30 toward the first end 6 of the main body 3. The stop ring 33 holds the shutter 30 and the coupling/release slider in the main body 3 opposing the action of the second and of the third spring 34, 37. In said first configuration, a radially external surface of the shutter 30 near the head end 32 is located in the position of the annular sectors 15 and faces the same. The radially external surface of the shutter 30 prevents the clamps 14 from closing radially and maintains the terminal ends 20 of the control pins 16 projecting from the main body 3. The locking collar 21 is held in an axially rearward position by the coupling/release pins 29, which project radially from the through holes 11 in such a way that the first conical surface 24 lightly touches the terminal ends 20 of the control pins 16.

In order to engage the terminal 2 to the quick connect coupling 1, the operator grasps the locking collar 22 and inserts the male terminal 2 into the first end 6. The male terminal 2 rests against the head end 32 of the shutter 30 guided and centred by a radially internal annular surface 40 of the annular portion 8. The terminal 2 pushes the shutter 30 axially toward the second end 7, opposed by the second and third springs 34, 37, which are partially compressed. This movement brings the annular groove 39 of the coupling/release slider 35 near the coupling/release pin 29. The coupling/release pins 29 move radially, pushed by the second conical surface 26, and enter into the annular groove 39, freeing the locking collar 22, which can slide forward toward the first end 6. The rearward movement of the shutter 30 also frees the annular sectors 15, which can move radially inward. The first conical surface 24 of the locking collar 22 radially pushes the control pins 16 toward the main axis "X-X" and the annular sectors 15 are radially closed over the male terminal 2, engaging their thread portion with the thread of said male terminal 2 (lower half-section of figure 1). The coupling position is stable, since in the second configuration the axial movement of the coupling/release slider 35 is prevented by the coupling/release pin 29 held in position in the annular groove 39 by the locking collar 22 located in the forward position. In the coupling position, and when the quick connect coupling 1 is subjected to pressure, the slider 35 leaves the shutter 30 free to move axially under the compression of the gasket seated on top of it due to the operating pressure, and the clamps 14 rest against an axially internal annular surface 8a of the annular portion 8. The force of pressure exerted by the shutter 30 on the connected terminal 2 is initially assured by the action of the second spring 34, when the pressure of the fluid is minimal; then the push increases proportionally to the pressure introduced into the quick connect coupling 1.

In order to release the quick connect coupling 1 from the terminal 2, the operator pulls the locking collar 22 away from the terminal 2, in opposition to the first spring 23. The locking collar 22 slides axially over the main body 3 toward the second end 7, causing the first spring 23 to be compressed until freeing the control pins 16 and bringing the second conical surface 26 onto the coupling/release pins 29.

At this point, the clamps 14 are free to open radially, thus permitting the extraction of the male terminal 2, and simultaneously the coupling/release pins 29 move axially outward, releasing the coupling/release slider 35. The second and third springs 34, 37 thus push the coupling/release slider and the shutter 30 back toward the first configuration (upper half-section of figure 1).

The coupling/release slider 35 and the coupling/release pins 29 constitute coupling/release devices configured to block/unblock the axial movements of the shutter 30 and of the locking collar 22 relative to the main body 3 via the movement of the locking collar 22 itself.

In the different operative positions and during the movement of the various elements of the quick connect coupling 1, the diverging conical surface 24, the locking collar 22, the tooth 13 and the shutter 30 bring about the radial movement of each clamp 14, at the same time maintaining the annular sector 15 and the respective control pin 16 joined together (in the absence of constraints, in fact, the control pin 16 is free to come out of the radial hole 17).

In an unillustrated variant embodiment, the quick connect coupling is identical to the one in figure 1, except for that fact the clamps 14 of the quick connect coupling 1 are not threaded, since they engage with the male terminal 2 of figure 2, which is not threaded, but only profiled.

In further unillustrated threaded or profiled variant embodiments, the quick connect coupling 1 is as described above except for the fact that the clamps 14 do not extend 360° all around the main axis "X-X". For example, of the six clamps illustrated in figures 3 and 4, the quick connect coupling 1 may possess only one or two or three, reciprocally adjacent along an arc of a circle of 120° or 180°. In this case, the clamps 14 close on the terminal 2 asymmetrically and push it against the radially internal annular surface 40 of the annular portion 8 of the main body 3. The quick connect coupling 1 can also comprise two clamps 14 set in diametrically opposed positions relative to said main axis "X-X".

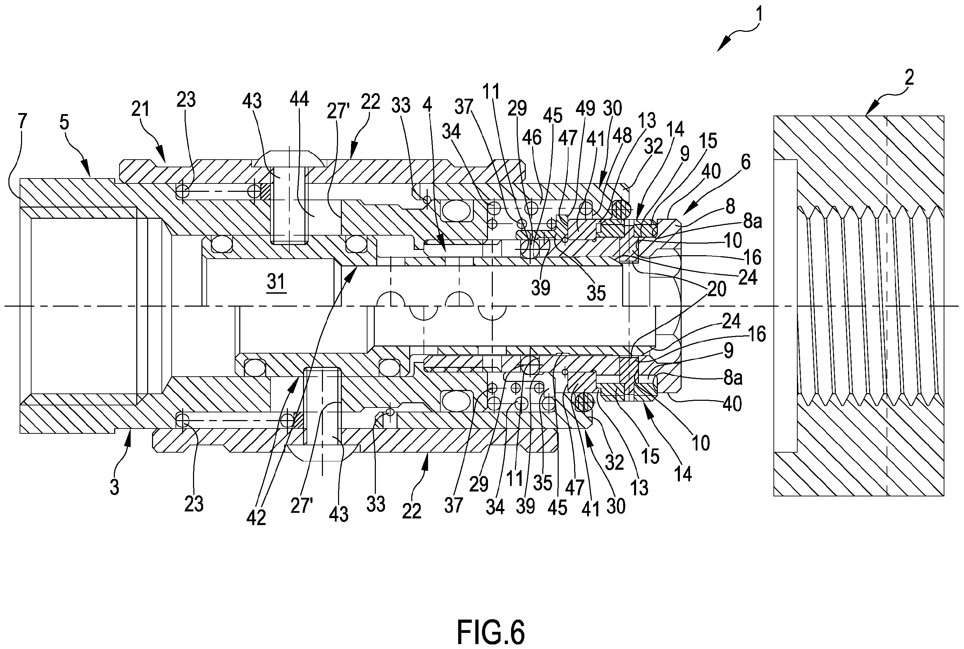

In a different embodiment, again in accordance with the present invention and illustrated in figure 6, the quick connect coupling 1 is of the male type and the terminal 2 is female and internally threaded. The upper radial half-section of figure 6 illustrates the quick connect coupling 1 in a first configuration in which the terminal 2 is separated and disengaged from the quick connect coupling 1. The lower radial half-section of the figure 6 illustrates the quick connect coupling 1 in a second configuration in which the terminal 2 is engaged to the quick connect coupling 1. As may be noted, the same reference numbers have been used for the elements corresponding to those of the quick connect coupling as per figure 1. The quick connect coupling 1 of figure 6 comprises a substantially tubular main body 3 which extends along a main axis "X-X" and is made up of a first portion 4 removably screwed to a second portion 5. The main body 3 likewise has a first end 6 and a second end 7.

The first portion 4 of the main body 3 has an annular end portion 8 which delimits, in an axially internal position, an annular seat 9 turned radially outward, that is, on the side opposite the main axis "X-X", and coaxial with said main axis "X-X". At said annular seat 9, the main body 3 has a plurality of radial seats 10 defined by through openings in the wall of the first portion 4. Said annular seats 10 are angularly equally spaced and open in a bottom surface of the aforesaid annular seat 9.

The main body 3 is further provided with through holes 11 axially spaced from the annular seat 9. Said through holes 11 are likewise radial, for example angularly equally spaced, and can be in a number that is equal to or different from the number of the radial seats 10. In the embodiment illustrated in figure 6, the through holes 11 are fashioned in the wall of the first portion 4 of the main body 3 and have the purpose of favouring the pressurization of the shutter 30 during the operating phase.

The first portion 4 comprises an annular body 41, which, together with the annular portion 8, delimits the aforesaid annular seat 9. Said annular body 41 has a tooth 13 that extends axially in the aforesaid annular seat 9 and is radially spaced from the bottom surface of the same annular seat 9. In the embodiment illustrated in figure 6, the tooth 13 has the profile of a circular edge coaxial with the main axis "X-X".

A plurality of clamps 14 is housed in the annular seat 9; each clamp is defined by a respective annular sector 15 and a control pin 16 associated with the respective annular sector 15. In the embodiment illustrated in figure 6, the quick connect coupling 1 comprises six annular sectors 15, each of which extends angularly for about 60° around the main axis "X-X". Each of the annular sectors 15 has a radial hole 17, which opens radially inward and stably houses (for example by interference) one end of a respective control pin 16. The control pins 16 extend radially inward from the respective annular sectors 15. Each of the annular sectors 15 has, on a radially external surface, a thread portion 18 (schematically illustrated) shaped so as to couple correctly with the internally threaded female terminal. Each of the annular sectors 15 further has a stop edge 19 which projects axially and is set in a radially internal position relative to the thread portion 18. In the illustrated embodiment, the stop edge 19 also extends like a circumferential arc.

Each of the annular sectors 15 is movable between a first position that is closer to the axis "X-X" and a second position that is farther away from said main axis "X-X". In the first position, each of the annular sectors 15 lies in contact with the bottom surface of the annular seat 9 (and is held there in the manner that will be described in detail further below), with its stop edge 19 radially spaced from the tooth 13. Furthermore, a radially external terminal end 20 of the control pin 16 projects radially from a radially external surface of the main body 3.

In the second position, each of the annular sectors 15 is radially spaced from the bottom surface of the annular seat 9 (and is held there in the manner that will be described in detail further below), with its stop edge 19 in abutment against the tooth 13. The tooth 13 acts as a limit stop element for the respective clamp 14. Furthermore, the terminal end 20 of the control pin 16 lies substantially flush with the radially internal surface of the main body 3.

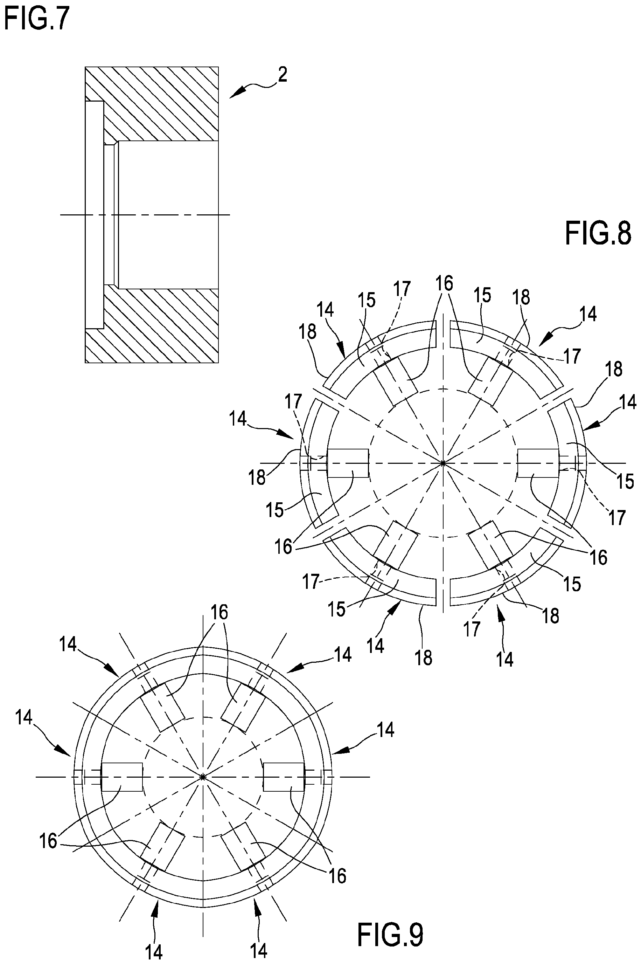

With reference to figures 8 and 9, in the second position (figure 8) the annular sectors 15 are radially expanded and circumferentially spaced apart from one another. In the first position (figure 9), the annular sectors 15 are radially contracted and circumferentially adjacent to one another.

In the embodiment of figure 6, the auxiliary body 21 comprises a locking collar 22 which surrounds the main body 3 and can slide over it and a radially internal body 42 solidly connected to the locking collar 22. The radially internal body 42 is positioned inside the main body 3 and has an axial passage which, together with the main body 3, defines the passage conduit 31 for the fluid. At least one connecting element 43 is solidly connected to the locking collar 22 and to the radially internal body 42 and passes in a slot 44 which extends along the main axis "X-X" and is fashioned in the main body 3. In figure 6, the quick connect coupling 1 comprises two connecting elements 43 defined by two radially oriented screws.

In a radially intermediate position between the locking collar 22 and the second portion 5 of the main body 3, there is a first spring 23 which lies in an annular gap delimited between the locking collar 22 and the second portion 5. The first spring 23 is of the helical type and coaxially surrounds the main axis "X-X". The first spring 23 lies in abutment against an annular surface of the main body 3 which is perpendicular to the main axis "X-X" and turned toward the first end 6 of the main body 3, and against an annular surface solidly joined with the locking collar 22 which is perpendicular to the main axis "X-X" and turned toward said annular surface of the main body 3. The first spring 23 is configured to push the locking collar 22 toward the first end 6 of the main body 3.

An axial end of the radially internal body 42 turned toward the first end 6 of the main body 3 has a bevel defined by a first radially external conical surface 24 which converges toward said first end 6. Said first converging conical surface 24 constitutes an operative portion configured to engage with the terminal ends 20 of the control pins 16. The locking collar, the radially internal body 42 and the first conical portion 24 constitute activation devices of the quick connect coupling 1 operatively engaged with the clamps 14.

In the first configuration (upper radial half-section of figure 6), the first conical surface 24 lightly touches and contains the terminal ends 20 of the control pins 16 which project from the main body 3. In the second configuration (lower radial half-section of figure 6), the first conical surface 24 is set axially beyond the terminal ends 20 and lies near the annular portion 8. In said second configuration, the radially internal body 42 lies above the radially internal terminal ends 20 of the control pins 16 and maintains the annular sectors 15 in the second position (figure 8).

The radially internal body 42 has an annular groove 45, coaxial with the main axis "X-X", on a radially external surface.

Coupling/release elements 29 defined by respective balls are slidingly inserted in the through holes 11 of the main body 3.

In the first configuration (upper radial half-section of figure 6), the balls 29 project radially inward from the respective through holes 11 (in the manner that will be described in detail further below) and the projecting part thereof lies in the annular groove 45.

In the second configuration (lower radial half-section of figure 6), the balls 29 are completely extracted from the annular groove 45 and the first spring 23 pushes axially each of the screws 43 solidly joined with the locking collar 22 against a respective abutment surface 27' defined at the end of the respective slot 44.

The quick connect coupling 1 of figure 6 comprises a substantially tubular shutter 30 coaxial with the main body 3. The shutter 30 is radially external to the main body 3 and is axially movable relative to said main body 3. In particular, the shutter 30 is radially interposed between said main body 3 and the locking collar 22.

The shutter 30 has a head end 32 intended to enter into contact with a head end of the terminal 2 (second configuration illustrated in the lower radial half-section of figure 6). The shutter 30 has a stop ring 33 placed at an end opposite that of the head 32, radially internal and configured to enter into contact with a radially external protuberance of the main body 3, in such a way as to prevent the axial exit of the shutter 30 from the first end 6 of the main body 3.

A second spring 34 is axially interposed between the main body 3 and the shutter 30 and is configured to push said shutter 30 toward the first end 6 of the main body 3. The second spring 34 illustrated is of helical type, coaxial with the main axis. The second spring 34 is housed inside the shutter 30 and is radially external to the main body 3. The second spring 34 lies in a variable-volume annular chamber 46 delimited between the shutter 30 and the main body 3. The second spring 34 lies in abutment against an annular surface of the main body 3 perpendicular to the main axis "X-X" and against an annular surface of the shutter 30 perpendicular to the main axis "X-X" and turned toward the aforesaid annular surface of the main body 3. The second spring 34, when the quick connect coupling 1 is in the first configuration, pushes the stop ring 33 against the annular protuberance.

The quick connect coupling 1 comprises a coupling/release slider 35 which is likewise tubular, coaxial with the main body 3 and axially movable relative to the main body 3 and relative to the shutter 30. In figure 6 the coupling/release slider 35 externally surrounds the main body 3 and is radially internal to the shutter 30. In particular, the coupling/release slider 35 is housed in the annular chamber 46. Said annular chamber 46 further houses a third spring 37 axially interposed between the main body 3 and the coupling/release slider 36. The third spring 37 is of the helical type and coaxially surrounds the main axis "X-X".

The third spring 37 lies in abutment against an annular surface of the main body 3 which is perpendicular to the main axis "X-X" and turned toward the first end 6 of the main body 3, and against an annular surface of the coupling/release slider 35 which is perpendicular to the main axis "X-X" and turned toward said annular surface of the main body 3. The third spring 37 is configured to push the coupling/release slider 35 toward the first end 6 of the main body 3 and against an annular surface 47 of the annular body 41 solidly joined with the main body 3, perpendicular to the main axis "X-X" and turned toward the annular surface of the main body 3.

The coupling/release slider 35 has a radially internal annular groove 39.

In the position of release from the terminal 2, illustrated in the upper half-section of figure 6, the quick connect coupling 1 is in the first configuration. In the first configuration, the coupling/release element 29 (ball) lies outside the annular groove 39 of the coupling/release slider 35 and lies in the annular groove 45 of the radially internal body 42. The coupling/release slider 35 is in abutment against the annular surface 47 of the annular body 41, pushed by the third spring 37. The second spring 34 pushes the shutter 30 toward the first end 6 of the main body 3 and the stop ring 33 holds the shutter 30 in the main body 3, opposing the action of the second spring 34.

In the first configuration, a surface radially internal to the shutter 30 near the head end 32 is located in the position of the annular sectors 15 and faces the same. The surface radially internal to the shutter 30 prevents the clamps 14 from opening radially and maintains the terminal ends 20 of the control pins 16 projecting radially inward from the main body 3.

The auxiliary body 21 is held in an axially rearward position by the coupling/release balls 29 which project radially from the through holes 11 and are partially inserted in the annular groove 45.

In order engage the terminal 2 to the quick connect coupling 1, the operator grasps the locking collar 22 and inserts the first end 6 in the female terminal 2. The female terminal 2 rests against the head end 32 of the shutter 30 guided and centred by a radially external annular surface 40 of the annular portion 8. The terminal 2 pushes the shutter 30 axially toward the second end 7, opposed by the second spring 34, which is partially compressed. This movement brings a radially internal crown 48 of the shutter 30 against a radially external crown 49 of the coupling/release slider 35. The shutter 30 rests against the coupling/release slider 35 and pushes it back toward the second end 7, opposed by the second and third springs 34, 37, which are partially compressed until the annular groove 39 of the coupling/release slider 35 arrives at the coupling/release ball 29.

At this point, the coupling/release balls 29 move toward the outside and enter the annular groove 39, freeing the radially internal body 42 and the locking collar 22, which can slide forward toward the first end 6.

The rearward movement of the shutter 30 also frees the annular sectors 15, which can move radially toward the outside.

The first conical surface 24 of the radially internal body 42 radially pushes the control pins 16 away from the main axis "X-X" and the annular sectors 15 open radially, engaging their thread portion with the internal thread of said female terminal 2 (lower half-section of figure 6).

The coupling position is stable, since in the second configuration the axial movement of the coupling/release slider 35 is prevented by the coupling/release ball 29 held in position in the annular groove 39 by the radially internal body 42 in the forward position.

In order to release the quick connect coupling 1 from the terminal 2, the operator pulls the locking collar 22 away from the terminal 2 in opposition to the first spring 23.

The locking collar 22 and the radially internal body 42 slide axially on the main body 3 toward the second end 7, causing the first spring 23 to be compressed until freeing the control pins 16 and bringing the annular groove 45 of the radially internal body 42 into the position of the coupling/release balls 29.

At this point, the clamps 14 are free to close radially, permitting the extraction of the first end 6 of the main body 3 from the female terminal 2 and simultaneously the coupling/release balls 29 move axially inward in said annular groove 45, freeing the coupling/release slider 35. The second and third springs 34, 37 thus push the coupling/release slider and the shutter 30 back toward the first configuration (upper half-section of figure 6).

In the different operative positions and during the movement of the various elements of the quick connect coupling 1, the converging conical surface 24, the tooth 13 and the shutter 30 determine the radial movement of each clamp 14, while at the same time maintaining the annular sector 15 and the respective control pin 16 joined together (in the absence of constraints, in fact, the control pin 16 is free to come out of the radial hole 17).

In an unillustrated variant embodiment, the quick connect coupling is identical to the one of figure 6, except for the fact that the clamps 14 of the quick connect coupling 1 are not threaded, since they engage with the female terminal 2 of figure 7, which is not threaded, but only profiled.

In further unillustrated variant threaded or profiled embodiments, the quick connect male coupling 1 is as described above, except for the fact that the clamps 14 do not extend 360° all around the main axis "X-X", analogously to what was described for the female terminal.

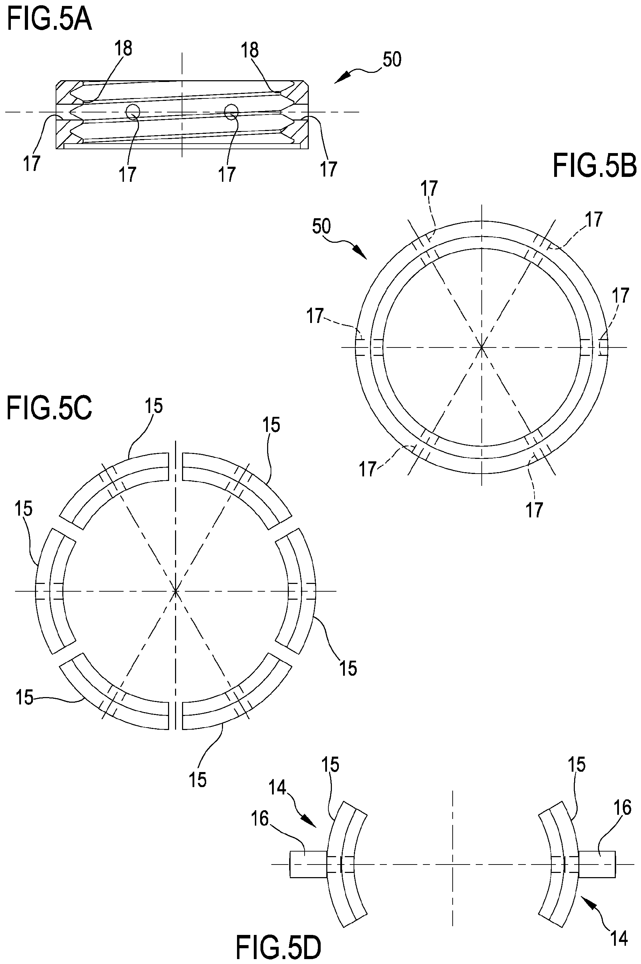

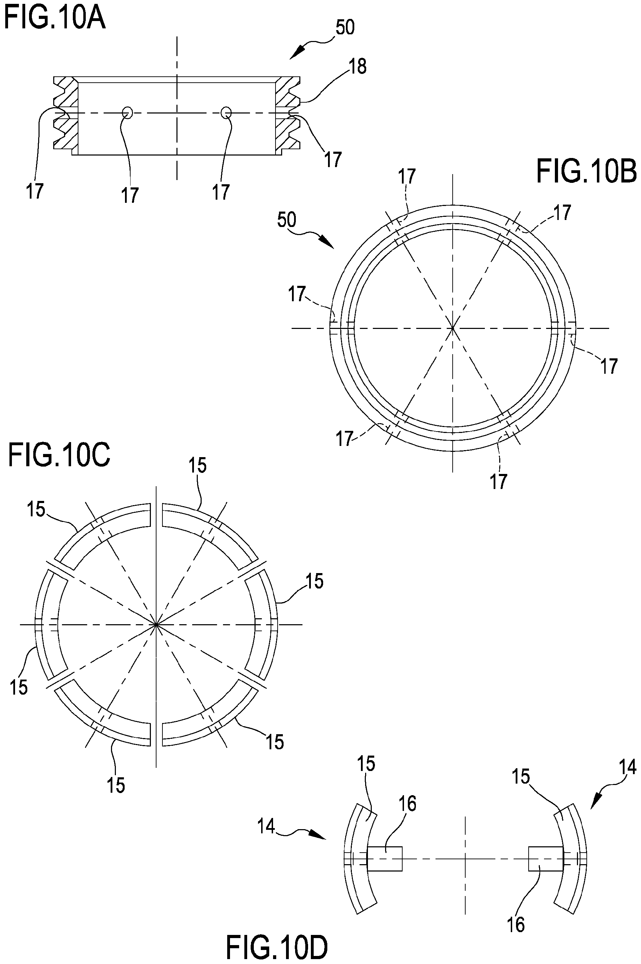

The present invention also relates to a method for constructing a quick connect coupling 1 of the above-described type (male in figure 1 or female in figure 6, threaded or non-threaded, figures 2 and 7). In particular, the method relates to the construction of the clamps 14. As illustrated in figures 5A-5D and 10A-10D, a complete ring 50 is made first (threaded if the clamps must be so). The ring 50 is perforated so as to create the radial holes 17 and then cut into the annular sectors 15. Finally, the control pins 16 are inserted into said radial holes 17. The cuts are made along radial lines and the radial holes 17 are centred relative to the angular width of the respective annular sectors 15.

In one embodiment, the clamps 14 obtained from a single ring 50 are then mounted on a single quick connect coupling 1 so as to form a complete series which extends all around the main axis "X-X" for 360°.

Prior to cutting, the annular sectors are marked, for example by writing a number at each radial hole. The numbering can be progressive in a clockwise or anticlockwise direction. Thanks to the marking of each annular sector 15 made prior to the cut, it will be possible to correctly compose the sectors in such a way as to obtain the original continuity in the pattern of the threaded surface, if present.

In other embodiments, the clamps 14 obtained from a single ring 50 are installed on different quick connect couplings 1. For example, a single clamp 14 is installed on each of six different quick connect couplings 1 or three pairs of clamps 14 are mounted on three different quick connect couplings 1. Each of said pairs comprises, for example, two clamps 14 of said single ring 50 disposed in diametrically opposed positions relative to a central axis of the ring 50.

For the purposes of installation, the clamps 14 are first mounted on the first portion 4 of the main body 3, which is then screwed onto the second portion 5. For the purpose of carrying out maintenance and/or replacement operations, it is instead sufficient to unscrew the first portion 4 from the second 5 in order to remove the clamps 14.

In greater detail, as regards the quick connect coupling female of figure 1, the locking collar 22 is fitted onto the second portion 5 of the main body 3 with the interposition of the first spring 23. The first portion 4 with the clamps 14 is then screwed onto the second portion 5. The coupling/release pins 29 are fitted into the through holes 11 and then the shutter 30 with the coupling/release slider 35 and the third spring 37 are fitted through the first end 6 and secured by mounting the stop ring 33. The second spring 34 is then inserted through the second end 7 and the locking ring 3a is mounted.

As regards the male quick connect coupling of figure 6, the first portion 4 (with the clamps 14, the annular body 41, the coupling/release slider 35 and the third spring 37) is screwed onto the second portion 5. The shutter 30 is then fitted onto the main body 3 from the first end 6 with the second spring 34 and secured by mounting the stop ring 33. The coupling/release balls 29 are placed in the through holes 11. The locking collar 22 is fitted onto the main body 3 with the interposition of the first spring 23 and the radially internal body 42 is fitted into the second end 7. The locking collar 22 and the radially internal body 42 are constrained with the screws 43.

## Claims

1. A quick connect coupling for threaded or profiled terminals, comprising:
a substantially tubular main body (3) internally delimiting a passage conduit (31) for a fluid, wherein said main body (3) has a first end (6) configured to be removably connected with a terminal (2) and a second end (7) opposite the first end (6) and configured to be connected with a circuit;
a substantially tubular shutter (30) coaxial with the main body, wherein the shutter (30) is axially movable relative to the main body (3), and wherein said shutter (30) has a head end (32) intended to come into contact with the terminal (2);
at least one clamp (14) operatively engaged to the main body (3) at the first end (6), wherein said at least one clamp (14) comprises an annular sector (15) and is movable radially relative to the main body (3) between a first position of release from the terminal (2) and a second position of engagement to the terminal (2);
**characterized in that** said at least one clamp (14) comprises a control pin (16) mounted on the respective annular sector (15), radially oriented and slidingly engaged in a respective radial seat (10) fashioned in the main body (3);
activation devices (21, 22, 24; 21, 22, 24, 42) operatively engaged with said at least one clamp (14) so as to determine the passage thereof between the first position and the second position.

2. The quick connect coupling according to claim 1, wherein the activation devices (21, 22, 24; 21, 22, 24, 42) are operatively active on a terminal end (20) of the control pin (16) spaced from the annular sector (15).

3. The quick connect coupling according to claim 2, wherein said terminal end (20) of the control pin (16) is located at a first opening of the radial seat (10) opposite a second opening of said radial seat (10) near the annular sector (15).

4. The quick connect coupling according to one of claims 1, 2 or 3, wherein the activation devices (21, 22, 24; 21, 22, 24, 42) comprise a substantially tubular auxiliary body (21) which is axially slidable relative to the main body (3).

5. The quick connect coupling according to claim 4, wherein said auxiliary body (21) has an operative portion (24) engaged or engageable with the control pin (16) of said at least one clamp (14), and wherein said operative portion (24) acts on the terminal end (20) of the control pin (16).

6. The quick connect coupling according to claim 5, wherein the operative portion (24) has a bevel acting against the terminal end (20) of the control pin (16).

7. The quick connect coupling according to one of the preceding claims 1 to 6, wherein the shutter (30) is axially movable relative to the main body (3) between a forward position toward the first end (6) of the main body (3), in which it radially and at least partially surmounts said at least one clamp (14) in order to hold it in the first position of release from the terminal (2), and a rearward position, wherein it frees said at least one clamp (14) and allows the radial movement thereof.

8. The quick connect coupling according to one of the preceding claims 1 to 7, wherein said at least one clamp (14) is held in its respective angular position around the main axis (X-X) by the respective control pin (16).

9. The quick connect coupling according to one of the preceding claims 1 to 8, comprising a single clamp (14) or a plurality of clamps (14) arranged around the passage conduit (31), wherein at least two clamps (14) of said plurality of clamps (14) are arranged in diametrically opposed positions relative to a main axis (X-X) of the passage conduit (31).

10. The quick connect coupling according to one of the preceding claims 1 to 9, wherein said at least one clamp (14) is housed in an annular seat (9) of the main body (3), and wherein, in the movement between the first and second positions, said at least one clamp (14) moves radially in the annular seat (9).

11. The quick connect coupling according to one of the preceding claims 1 to 10, comprising at least one limit stop element (13) for said at least one clamp (14), wherein said limit stop element (13) is part of said annular seat (9).

12. The quick connect coupling according to one of the preceding claims 1 to 11, wherein the main body (3) comprises an annular portion (8) located at the first end (6) in an axially external position relative to said at least one clamp (14), and wherein said annual portion (8) has an axially internal annular surface (8a) against which said at least one clamp (14) axially rests.

13. A method for making a quick connect coupling in accordance with one or more of the preceding claims 1 to 12, wherein the method comprises:
making a complete ring (50);
cutting the complete ring (50) into a plurality of annular sectors (15);
associating a control pin (16) with each of the annular sectors (15), forming a plurality of clamps (14);
mounting at least one of said clamps (14) in an annular seat (9) fashioned in a first portion (4) of the main body (3) and inserting the respective control pin (16) in a radial seat (10) fashioned in said first portion (4);
screwing the first portion (4) with the clamps (14) onto a second portion (5) of the main body (3).

14. The method according to claim 13, wherein the control pins (16) are associated with the annular sectors (15) at the time of being mounted on the respective main body (3).

15. The method according to claim 13 or 14, comprising: mounting one or more annular sectors (15) of a ring (50) on main bodies (3) belonging to different quick connect couplings (1); and/or comprising mounting diametrically opposed pairs of annular sectors (15) of said ring (50) on different main bodies (3) belonging to different quick connect couplings (1).

## Patentansprüche

1. Schnellverbindungskupplung für mit Gewinden oder Profilen versehene Anschlüsse, umfassend:
einen im Wesentlichen röhrenförmigen Hauptkörper (3), welcher intern eine Durchgangsleitung (31) für ein Fluid begrenzt, wobei der Hauptkörper (3) ein erstes Ende (6), welches dazu eingerichtet ist, mit einem Anschluss (2) lösbar verbunden zu werden, und ein zweites Ende (7) aufweist, welches dem ersten Ende (6) entgegengesetzt ist und dazu eingerichtet ist, mit einem Umlauf verbunden zu werden;
eine im Wesentlichen röhrenförmige Abschlusseinheit (30), welche zu dem Hauptkörper koaxial ist, wobei die Abschlusseinheit (30) relativ zu dem Hauptkörper (3) axial bewegbar ist, und wobei die Abschlusseinheit (30) ein Kopfende (32) aufweist, welches dazu bestimmt ist, mit dem Anschluss (2) in Kontakt zu kommen;
wenigstens eine Klammer (14), welche mit dem Hauptkörper (3) an dem ersten Ende (6) betriebsmäßig in Eingriff steht, wobei die wenigstens eine Klammer (14) einen ringförmigen Sektor (15) umfasst und relativ zu dem Hauptkörper (3) zwischen einer ersten Position einer Freigabe von dem Anschluss (2) und einer zweiten Position eines Eingriffs mit dem Anschluss (2) radial bewegbar ist;
**dadurch gekennzeichnet, dass** die wenigstens eine Klammer (14) einen Steuerstift (16) umfasst, welcher an dem jeweiligen ringförmigen Sektor (15) angebracht, radial orientiert und in einem jeweiligen radialen Sitz (10), welcher in dem Hauptkörper (3) gebildet ist, gleitbar In Eingriff stehend ist;
Aktivierungsvorrichtungen (21, 22, 24; 21, 22, 24, 42), welche mit der wenigstens einen Klammer (14) betriebsmäßig in Eingriff stehen, um den Durchgang davon zwischen der ersten Position und der zweiten Position zu bestimmen.

2. Schnellverbindungskupplung nach Anspruch 1, wobei die Aktivierungsvorrichtungen (21, 22, 24; 21, 22, 24, 42) an einem Anschlussende (20) des Steuerstifts (16) von dem ringförmigen Sektor (15) beabstandet betriebsmäßig aktiv sind.

3. Schnellverbindungskupplung nach Anspruch 2, wobei das Anschlussende (20) des Steuerstifts (16) an einer ersten Öffnung des radialen Sitzes (10) einer zweiten Öffnung des radialen Sitzes (10) entgegengesetzt nahe dem ringförmigen Sektor (15) angeordnet ist.

4. Schnellverbindungskupplung nach einem der Ansprüche 1, 2 oder 3, wobei die Aktivierungsvorrichtungen (21, 22, 24; 21, 22, 24, 42) einen im Wesentlichen röhrenförmigen Hilfskörper (21) umfassen, welcher relativ zu dem Hauptkörper (3) axial gleitbar ist.

5. Schnellverbindungskupplung nach Anspruch 4, wobei der Hilfskörper (21) einen Betriebsabschnitt (24) aufweist, welcher mit dem Steuerstift (16) der wenigstens einen Klammer (14) in Eingriff steht oder in Eingriff bringbar ist, und wobei der Betriebsabschnitt (24) auf das Anschlussende (20) des Steuerstifts (16) einwirkt.

6. Schnellverbindungskupplung nach Anspruch 5, wobei der Betriebsabschnitt (24) eine Fase aufweist, welche gegen das Anschlussende (20) des Steuerstifts (16) wirkt.

7. Schnellverbindungskupplung nach einem der Ansprüche 1 bis 6, wobei die Abschlusseinheit (30) relativ zu dem Hauptkörper (3) zwischen einer Position nach vorne in Richtung des ersten Endes (6) des Hauptkörpers (3), in welcher sie die wenigstens eine Klammer (14) radial und wenigstens teilweise überragt, um sie in der ersten Position einer Freigabe von dem Anschluss (2) zu halten, und einer Position nach hinten axial bewegbar ist, wobei sie die wenigstens eine Klammer (14) löst und die radiale Bewegung davon erlaubt.

8. Schnellverbindungskupplung nach einem der vorhergehenden Ansprüche 1 bis 7, wobei die wenigstens eine Klammer (14) in ihrer jeweiligen Winkelposition um die Hauptachse (X-X) durch den jeweiligen Steuerstift (16) gehalten ist.

9. Schnellverbindungskupplung nach einem der vorhergehenden Ansprüche 1 bis 8, umfassend eine einzelne Klammer (14) oder eine Mehrzahl von Klammern (14), welche um die Durchgangsleitung (31) angeordnet ist/sind, wobei wenigstens zwei Klammern (14) der Mehrzahl von Klammern (14) in diametral entgegengesetzten Positionen relativ zu einer Hauptachse (X-X) der Durchgangsleitung (31) angeordnet sind.

10. Schnellverbindungskupplung nach einem der vorhergehenden Ansprüche 1 bis 9, wobei die wenigstens eine Klammer (14) in einem ringförmigen Sitz (9) des Hauptkörpers (3) aufgenommen ist, und wobei sich die wenigstens eine Klammer (14) in der Bewegung zwischen der ersten und der zweiten Position radial in dem ringförmigen Sitz (9) bewegt.

11. Schnellverbindungskupplung nach einem der vorhergehenden Ansprüche 1 bis 10, umfassend wenigstens ein Grenzstoppelement (13) für die wenigstens eine Klammer (14), wobei das Grenzstoppelement (13) Teil des ringförmigen Sitzes (9) ist.

12. Schnellverbindungskupplung nach einem der vorhergehenden Ansprüche 1 bis 11, wobei der Hauptkörper (3) einen ringförmigen Abschnitt (8) umfasst, welcher an dem ersten Ende (6) in einer axial äußeren Position relativ zu der wenigstens einen Klammer (14) angeordnet ist, und wobei der ringförmige Abschnitt (8) eine axial innere ringförmige Fläche (8a) aufweist, gegen welche die wenigstens eine Klammer (14) axial ruht.

13. Verfahren zum Herstellen einer Schnellverbindungskupplung im Einklang mit einem oder mehreren der vorhergehenden Ansprüche 1 bis 12, wobei das Verfahren umfasst:
Herstellen eines vollständigen Rings (50);
Schneiden des vollständigen Rings (50) in eine Mehrzahl von ringförmigen Sektoren (15);
Zuordnen eines Steuerstifts (16) zu jedem der ringförmigen Sektoren (15), wobei eine Mehrzahl von Klammern (14) gebildet wird;
Anbringen wenigstens einer der Klammern (14) in einem ringförmigen Sitz (9), welcher in einem ersten Abschnitt (4) des Hauptkörpers (3) gebildet ist, und Einsetzen des jeweiligen Steuerstifts (16) in einen radialen Sitz (10), welcher in dem ersten Abschnitt (4) gebildet ist;
Schrauben des ersten Abschnitts (4) mit den Klammern (14) auf einen zweiten Abschnitt (5) des Hauptkörpers (3).

14. Verfahren nach Anspruch 13, wobei die Steuerstifte (16) den ringförmigen Sektoren (15) zu der Zeit zugeordnet werden, zu welcher sie an dem jeweiligen Hauptkörper (3) angebracht werden.

15. Verfahren nach Anspruch 13 oder 14, umfassend: Anbringen eines oder mehrerer ringförmiger Sektoren (15) eines Rings (50) an Hauptkörpern (3), welche zu verschiedenen Schnellverbindungskupplungen (1) gehören; und/oder umfassend Anbringen von diametral entgegengesetzten Paaren von ringförmigen Sektoren (15) des Rings (50) an verschiedenen Hauptkörpern (3), welche zu verschiedenen Schnellverbindungskupplungen (1) gehören.

## Revendications

1. Raccord à connexion rapide pour organes effecteurs filetés ou profilés, comprenant :
un corps principal sensiblement tubulaire (3) délimitant au plan interne un conduit de passage (31) pour un liquide, où ledit corps principal (3) présente une première extrémité (6) configurée pour être connectée amovible à un organe effecteur (2) et une seconde extrémité (7) opposée à la première extrémité (6) et configurée pour être connectée à un circuit ;
un obturateur sensiblement tubulaire (30) coaxial avec le corps principal, où l'obturateur (30) est mobile axialement par rapport au corps principal (3), et où ledit obturateur (30) présente une extrémité de tête (32) prévue pour entrer en contact avec l'organe effecteur (2) ;
au moins un étrier (14) fonctionnellement engagé au niveau du corps principal (3) au niveau de la première extrémité (6), où ledit au moins un étrier (14) comprend un secteur annulaire (15) et est radialement mobile par rapport au corps principal (3) entre une première position de libération depuis l'organe effecteur (2) et une seconde position d'engagement avec l'organe effecteur (2) ;
**caractérisé en ce que** ledit au moins un étrier (14) comprend une broche de régulation (16) montée sur le secteur annulaire respectif (15), radialement orientée et engagée de manière coulissante dans une assise radiale respective (10) façonnée dans le corps principal (3) ;
des dispositifs d'activation (21, 22, 24 ; 21, 22, 24, 42) fonctionnellement engagés avec ledit au moins un étrier (14) afin de déterminer son passage entre la première position et la seconde position.

2. Raccord à connexion rapide selon la revendication 1, dans lequel les dispositifs d'activation (21, 22, 24 ; 21, 22, 24, 42) sont fonctionnellement actifs sur une extrémité terminale (20) de la broche de régulation (16) espacée du secteur annulaire (15).

3. Raccord à connexion rapide selon la revendication 2, dans lequel ladite extrémité terminale (20) de la broche de régulation (16) est localisée au niveau d'une première ouverture de l'assise radiale (10) opposée à une seconde ouverture de ladite assise radiale (10) près du secteur annulaire (15).

4. Raccord à connexion rapide selon l'une des revendications 1, 2 ou 3, où les dispositifs d'activation (21, 22, 24 ; 21, 22, 24, 42) comprennent un corps auxiliaire sensiblement tubulaire (21) qui peut axialement coulisser par rapport au corps principal (3).

5. Raccord à connexion rapide selon la revendication 4, dans lequel ledit corps auxiliaire (21) présente une partie fonctionnelle (24) engagée ou pouvant être engagée avec la broche de régulation (16) dudit au moins un étrier (14), et où ladite partie fonctionnelle (24) agit sur l'extrémité terminale (20) de la broche de régulation (16).

6. Raccord à connexion rapide selon la revendication 5, dans lequel la partie fonctionnelle (24) présente un chanfrein agissant contre l'extrémité terminale (20) de la broche de régulation (16).

7. Raccord à connexion rapide selon l'une des revendications précédentes 1 à 6, dans lequel l'obturateur (30) est axialement mobile par rapport au corps principal (3) entre une position avant vers la première extrémité (6) du corps principal (3), dans laquelle il surmonte radialement et au moins partiellement ledit au moins un étrier (14) afin de le maintenir dans la première position de libération depuis l'organe effecteur (2), et une position vers l'arrière, dans laquelle il libère ledit au moins un étrier (14) et permet son mouvement radial.

8. Raccord à connexion rapide selon l'une des revendications précédentes 1 à 7, ledit au moins un étrier (14) étant maintenu dans sa position angulaire respective autour de l'axe principal (X-X) par la broche de régulation respective (16).

9. Raccord à connexion rapide selon l'une des revendications précédentes 1 à 8, comprenant un étrier unique (14) ou une pluralité d'étriers (14) disposés autour du conduit de passage (31), où au moins deux étriers (14) de ladite pluralité d'étriers (14) sont disposés dans des positions diamétralement opposées par rapport à un axe principal (X-X) du conduit de passage (31).

10. Raccord à connexion rapide selon l'une des revendications précédentes 1 à 9, dans lequel ledit au moins un étrier (14) est logé dans une assise annulaire (9) du corps principal (3), et où, dans le mouvement entre la première et la seconde position, ledit au moins un étrier (14) se déplace radialement dans l'assise annulaire (9).

11. Raccord à connexion rapide selon l'une des revendications précédentes 1 à 10, comprenant au moins un élément d'arrêt limite (13) pour ledit au moins un étrier (14), où ledit élément d'arrêt limite (13) fait partie de ladite assise annulaire (9).

12. Raccord à connexion rapide selon l'une des revendications précédentes 1 à 11, dans lequel le corps principal (3) comprend une partie annulaire (8) localisée au niveau de la première extrémité (6) dans une position axialement externe par rapport audit au moins un étrier (14), et où ladite partie annuelle (8) présente une surface annulaire axialement interne (8a) contre laquelle ledit au moins un étrier (14) repose axialement.

13. Procédé de fabrication d'un raccord à connexion rapide selon l'une ou plusieurs des revendications précédentes 1 à 12, dans lequel le procédé comprend :
la fabrication d'un anneau complet (50) ;
la coupe de l'anneau complet (50) en une pluralité de secteurs annulaires (15) ;
l'association d'une broche de régulation (16) à chacun des secteurs annulaires (15), formant une pluralité d'étriers (14) ;
le montage d'au moins l'un desdits étriers (14) dans une assise annulaire (9) façonnée dans une première partie (4) du corps principal (3) et l'insertion de la broche de régulation respective (16) dans une assise radiale (10) façonnée dans ladite première partie (4) ;
le vissage de la première partie (4) avec les étriers (14) sur une seconde partie (5) du corps principal (3).

14. Procédé selon la revendication 13, dans lequel les broches de régulation (16) sont associées aux secteurs annulaires (15) au moment d'être montées sur le corps principal respectif (3).

15. Procédé selon la revendication 13 ou 14, comprenant : le montage d'un ou plusieurs secteurs annulaires (15) d'un anneau (50) sur les corps principaux (3) appartenant à différents raccords à connexion rapide (1); et/ou comprenant le montage de paires diamétralement opposées des secteurs annulaires (15) dudit anneau (50) sur différents corps principaux (3) appartenant à différents raccords à connexion rapide (1).
